# FASCICULE DE BREVET EUROPEEN

(11) **EP 1 390 920 B1**
(45) Date de publication et mention de la délivrance du brevet: **09.12.2009**
(21) Numéro de dépôt: 02740812.9
(22) Date de dépôt: 27.05.2002
(51) Int. Cl.: G07B 15/02

(54) **PROCEDE ET DISPOSITIF DE RESERVATION D'UNE PLACE DE STATIONNEMENT**
VERFAHREN UND VORRICHTUNG ZUR PARKPLATZRESERVIERUNG
METHOD AND DEVICE FOR BOOKING A PARKING SPACE

(30) Priorité: 31.05.2001 FR 0107205
(43) Date de publication de la demande: 25.02.2004
(73) Titulaire: PARKEON, 75015 Paris (FR)
(72) Inventeur: MANDY, Damien, F-25660 Fontain (FR)
(74) Mandataire: Domenego, Bertrand
(86) Numéro de dépôt international: PCT/FR2002/001765
(87) Numéro de publication internationale: WO 2002/097736

(56) Documents cités:
- EP-A- 0 646 897
- FR-A- 2 791 161
- US-A- 5 432 508
- US-B1- 6 230 868
- PATENT ABSTRACTS OF JAPAN vol. 1995, no. 04, 31 mai 1995 (1995-05-31) -& JP 07 021426 A (NIPPON SIGNAL CO LTD:THE;OTHERS: 02), 24 janvier 1995 (1995-01-24)

## Description

La présente invention concerne la réservation d'une place de stationnement.

Le stationnement des véhicules automobiles soulève des problèmes de plus en plus important du fait du développement du parc automobile. En effet, les places prévues en voirie pour accueillir des véhicules sont en nombre généralement limité notamment dans les centre-villes. Pour faciliter le stationnement du plus grand nombre dans les zones les plus sensibles, les municipalités ont donc instauré le stationnement payant.

Pour pouvoir parquer son véhicule dans une zone à stationnement payant, l'automobiliste doit acquitter une somme d'argent correspondant à la durée de stationnement choisie qui est généralement plafonnée à une ou deux heures. En l'absence d'un tel paiement, le véhicule est en infraction et il est susceptible de faire l'objet d'une contravention ou amende par des agents de surveillance dûment habilités, voire d'être mis en fourrière.

Pour stationner sur des places de stationnement payant, l'usager acquitte généralement les droits de stationnement auprès d'une borne adaptée à cet effet et disposée sur le trottoir à proximité de la place de stationnement occupée, borne ci-après appelée borne de stationnement.

Il existe différents modèles de borne de stationnement, principalement de type parcmètre ou horodateur. La présente invention concerne plus particulièrement les parcmètres.

Le système de type parcmètre consiste en une borne gérant un nombre prédéterminé d'emplacement de stationnement et dans laquelle l'automobiliste voulant stationner doit payer (par pièces, cartes, etc.) pour un montant correspondant au temps de stationnement désiré. Pour chaque emplacement est enregistré l'état courant des paiements définissant le statut autorisé ou non du stationnement. Cet état "payé" ou "non payé" étant affiché au moyen d'une indication visuelle appropriée sur la borne où bien encore délivré sous forme de reçu imprimé ou bien encore transmis à un terminal portatif de contrôle équipant les agents de surveillance.

Le contrôle d'un tel système de stationnement payant est simple dans la mesure où il suffit aux agents de surveillance de comparer le statut d'un emplacement soit donc à l'aide de l'indication visuelle affichée sur la borne correspondante soit à l'aide des autres moyens évoqués ci-dessus pour savoir si le véhicule occupant cet emplacement est en infraction ou non.

Par ailleurs, pour faciliter la gestion des bornes de paiement par leur exploitant (municipalités, etc.), le Demandeur a conçu des bornes de stationnement communicantes c'est-à-dire aptes à dialoguer avec un ordinateur central à distance.

Cet ordinateur central distant constitue un serveur de gestion qui permet à l'opérateur du parc de bornes de paiement d'opérer la supervision du fonctionnement de ces bornes. En particulier, ce serveur a pour fonction d'opérer le téléchargement de fichiers de paramètres, des tables de tarif ou encore des mises à jour des programmes faisant fonctionner les microprocesseurs des bornes de paiement, mises à jour améliorant les programmes déjà en place ou bien encore introduisant de nouvelles prestations pour les usagers.

En retour, les bornes transmettent des rapports d'activité journaliers ou encore des alarmes lorsque des événements nécessitant l'intervention d'un agent de maintenance surviennent : coffre plein de monnaie mais aussi pannes ou actes de vandalisme.

Par ailleurs, la circulation des voitures dans les villes est une préoccupation actuelle majeure des compagnies de transport, des municipalités, des opérateurs de places de stationnement...

Or, une des causes de l'engorgement automobile des villes réside dans l'accès aux places de stationnement. Par exemple, il n'est pas rare de voir des véhicules circulant de longues minutes dans un quartier à la recherche d'un emplacement de stationnement qui se libère.

Pour remédier à cet inconvénient, il a été imaginé d'équiper les places de stationnement de capteurs de présence véhicule reliés à un central. Ce central élabore en temps réel une cartographie des places libres et est à même de guider les automobilistes vers les places libres en utilisant des moyens de guidage de type GPS. Un tel système est complexe et coûteux à réaliser puisqu'il suppose de nouveaux moyens tuant au niveau de l'équipement des voiries que des véhicules automobiles. Par ailleurs, il ne résout pas entièrement le problème dans la mesure où plusieurs automobilistes peuvent ainsi se trouver guider vers une même et unique place.

Le document JP-A-07 021 426 décrit un procédé de reservation d'une place de parking à distance.

Le document US-B1-6,230,868 décrit une borne de rue du type parcmètre.

La présente invention se propose de résoudre ces problèmes et ce, de façon particulièrement simple et avantageuse.

En effet, il est possible de prévoir le besoin de stationnement de nombreux automobilistes. En effet, une quantité non négligeable d'automobilistes est dans la position d'anticiper son voyage. Ainsi, beaucoup d'automobilistes savent à l'avance qu'ils ont l'intention d'aller à une destination précise en sachant à quel moment ils souhaitent arriver et à quel moment ils souhaitent repartir.

Le Demandeur s'est donc posé le problème de fournir un système de réservation de place de stationnement permettant de faciliter la mobilité des automobilistes et de rendre plus aisé l'accès aux places de stationnement en voirie.

Grâce à un tel système, chaque automobiliste muni d'une réservation est sûr d'avoir une place. Quant aux automobilistes qui ne peuvent obtenir de réservation du fait de la saturation du parc de places de stationnement, ils se trouvent incités à laisser leurs véhicules pour se rendre en ville et à se tourner vers d'autres modes de transport ou bien à décaler leur déplacement dans la journée ou la semaine.

La présente invention porte donc sur un procédé de réservation d'une place de stationnement et sur un dispositif de mise en oeuvre d'un tel dispositif.

Le procédé de réservation concerne plus particulièrement une pluralité de places de stationnement payant gérées par au moins une borne de stationnement de type parcmètre c'est-à-dire comportant pour chaque place gérée des moyens d'indication de l'état des paiements définissant le statut autorisé ou non du stationnements,

Selon la définition générale de l'invention, un objet de l'invention est un procédé de réservation selon l'une quelconque des revendications 1 à 10.

Un autre objet de l'invention est un dispositif de réservation selon l'une quelconque des revendications 11 à 19.

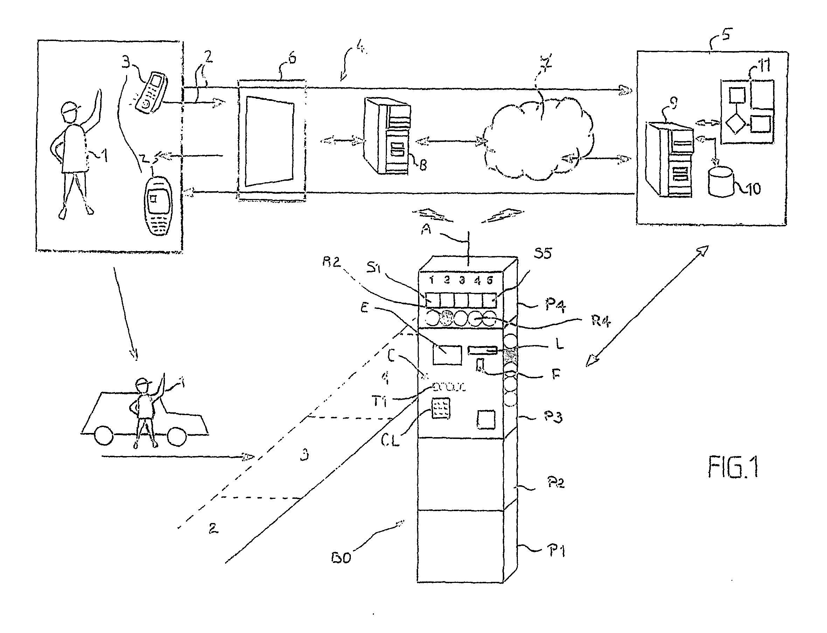

D'autres caractéristiques et avantages de l'invention apparaîtront à la lumière de la description détaillée ci-après et des dessins dans desquels
- la figure 1 est une vue schématique illustrant le dispositif et le procédé de réservation de places de stationnement selon l'invention.

La présente invention offre à un automobiliste, référencé 1, la possibilité de réserver au moins une place de stationnement par anticipation dans une rue équipée de bornes de stationnement BO ou encore dans un quartier dont les rues sont équipées de bornes de stationnements BO.

Chacune des bornes BO se présente sous la forme d'un parcmètre gérant une ou plusieurs places de stationnement. Dans l'exemple de réalisation figuré, la borne BO gère cinq places de stationnement numérotées de 1 à 5.

Ces bornes BO sont, de façon connue, des terminaux conçus spécialement pour leur utilisation en site public. Ils présentent donc des spécificités en terme d'éléments constitutifs et de logiciels, de consommation énergétique, d'ergonomie, d'utilisation, etc., qui sont bien connus en eux-mêmes et ne seront pas détaillés.

La borne de stationnement BO illustrée a une forme générale parallélépipédique, avec une hauteur de l'ordre de 1,70 m, une largeur de l'ordre de 50 cm et une profondeur de l'ordre de 40 cm.

De préférence, la borne BO comprend 4 parties individualisées en P1 à P4.

La partie P1 correspond au premier niveau de la borne par rapport au sol, elle comporte par exemple des éléments non liés directement à l'invention.

La partie P2, disposée sur la partie P1 contient par exemple un coffre-fort non figuré destiné à contenir des pièces de monnaie.

La partie P3 comprend en face avant une interface homme/machine IHM que l'on décrira ci-après.

La partie P4 comporte des moyens d'indication visuelle MID que l'on présentera également plus en détail. Ces moyens d'indication visuelle MID permettent aux agents chargés de la surveillance des places de stationnement et de la verbalisation des véhicules en infraction, de déterminer visuellement l'état de paiement des places.

De préférence, les moyens d'indication visuelle MID sont disposés de telle sorte que les agents chargés de la surveillance des places de stationnement soient capables de prendre connaissance rapidement et sans peine, par exemple à partir d'un véhicule en circulation sur la voie, des indications figurant sur lesdits moyens d'indication.

En référence à la figure 1, l'interface homme/machine IHM comprend une fente F pour l'introduction de pièces de monnaie dont le montant global détermine le temps de stationnement désiré. Les pièces introduites dans la fente sont contrôlées par un sélecteur de pièces (non représenté) qui détecte le montant effectif introduit dans la fente F. En pratique, après être passées dans le sélecteur de pièces, les pièces de monnaie sont stockées dans un coffre logé dans la partie P2.

La borne BO peut être équipée d'un moyen de rendu de monnaie.

A partir du montant introduit et de l'information de temps présent délivré par une base de temps (par exemple du type circuit d'horloge), le circuit électronique de commande non figuré de la borne, qui comporte notamment un microcontrôleur, des mémoires de type ROM, RAM, EEPROM et des interfaces d'entrée/sortie, élabore l'heure limite de stationnement autorisé. Cette heure limite est affichée par un écran de visualisation E.

La borne BO peut en substitution ou en complément du sélecteur de pièces, être équipée d'un lecteur de cartes de paiement L, disposé en dessus/dessous du sélecteur de pièces. Le lecteur de cartes peut être adapté pour lire des cartes à piste magnétique ou des cartes à mémoire électronique appelées encore carte à puce.

Le lecteur de cartes peut être accompagné de boutons de sélection de données liées à la lecture de cartes de paiement. Ces boutons peuvent aussi servir à sélectionner la langue de la procédure homme/machine.

De même, l'écran d'affichage E peut être accompagné de boutons de sélection permettant de sélectionner certains paramètres liés à la transaction de paiement.

Il est également prévu un clavier C comprenant une rangée de cinq touches individualisées ici en T1 à T5 permettant d'identifier l'emplacement de stationnement sélectionné par l'usager.

Des indications portées sur la face avant de la partie P3 complétées le cas échéant par un marquage au sol au niveau des places de stationnement permettent d'identifier clairement et sans ambiguïté les places correspondantes aux touches T1 à T5, ceci afin de signaler l'ordre et la configuration des emplacements de stationnement par rapport à la borne, et donc de guider l'usager dans sa sélection.

Le nombre de touches du clavier C peut être modifié en fonction de la configuration des emplacements de stationnement.

Le clavier C est accessible à l'usager pour identifier l'emplacement de stationnement choisi parmi la pluralité d'emplacements gérés par la borne de stationnement BO.

Les touches T1 à T5 du clavier C sont par exemple du type bouton-poussoir.

Selon l'invention, la borne comprend en outre des moyens de saisie d'un code secret de réservation détaillé plus en détail ci-après. Ces moyens sont formés par un clavier CL comportant au moins les dix touches correspondantes respectivement aux chiffres zéro à neuf ainsi que des touches correspondant à des fonctions prédéterminées.

Bien évidemment les éléments de l'interface homme/machine qui viennent d'être décrits ne sont pas limitatif de l'invention. La borne BO peut également comprendre un scanner, un dispositif de communication infrarouge, un dispositif de reconnaissance vocale ou bien encore un dispositif d'échange de données fonctionnant selon les protocoles IrDA, "Bluetooth" ou analogue.

La borne BO comporte dans sa partie P4 des moyens d'indication visuelle MID de l'état de surveillance des emplacements gérés par la borne BO ainsi que de l'état de réservation éventuelle de ces emplacements. Ces moyens d'indication visuelle MID peuvent être disposés en face avant et/ou en face arrière de la borne BO, en fonction de la disposition de l'interface homme/machine de la borne par rapport à la voie publique VO.

En effet, il est très avantageux de disposé les moyens d'indication visuelle de manière à ce que les agents de surveillances puissent prendre connaissance de l'état de paiement des places de stationnement depuis un véhicule circulant sur la voie publique. En d'autres termes, l'interface homme/machine de la borne peut être disposée face à la voie publique ou bien dos à la voie publique tandis que la disposition des moyens d'indication visuelle est de préférence face à la voie publique. La gestion de l'interface homme/machine tient bien évidemment compte de la disposition de la borne par rapport à la voie publique. En variante, les moyens d'indication visuelle MID peuvent d'être visibles simultanément en face avant et en face arrière ainsi d'ailleurs qu'en faces latérales.

Dans l'exemple de réalisation non limitatif de la figure 1, les moyens d'indication visuelle MID comprennent deux jeux d'éléments d'indication visuelle associés aux emplacements de stationnement gérés par la borne BO. Bien évidemment il ne s'agit là que d'un mode de réalisation et il pourrait très bien n'y avoir qu'un seul jeu d'indication visuelle associé aux emplacements gérés par la borne pour remplir les fonctions des deux jeux illustrés.

Les éléments d'indication visuelle sont agencés de façon conjuguée à l'agencement des emplacements de stationnement par rapport à la borne, afin de signaler l'ordre et la configuration des emplacements de stationnement par rapport à la borne, ce qui permet d'aider les agents de surveillances.

Le premier jeu d'éléments d'indication visuelle S1 à S5 indique l'état des places : "payé", "non payé", "non géré". L'information "non géré" correspondant au cas où la borne BO est utilisée pour superviser un nombre de places de stationnement inférieur au capacité du terminal, par exemple une borne conçues pour superviser dix places et qui n'est utilisée que pour sept emplacements.

L'unité de traitement électronique de la borne BO compare l'heure limite de stationnement associée à un emplacement identifié par l'usager à l'aide de la touche Ti du clavier C avec l'information de temps délivrée par la base de temps du circuit électronique précité et traite le résultat de la comparaison afin de le faire apparaître en temps réel sur l'élément d'indication visuelle correspondant Si.

Par exemple, les éléments d'indication individuels S1 à S5 de l'état de surveillance des emplacements de stationnements associés sont des éléments d'affichage à changement d'état ou lumineux possédant chacun trois bandes horizontales d'affichage.

Par exemple, chaque bande horizontale peut être dans un état de couleur jaune ou lumineux actif (allumé) d'une part ou dans un état de couleur noire ou non actif (éteint) d'autre part. On peut alors définir les trois états "payé", "non payé", "non géré" de la façon suivante :
- un état "non géré" dans lequel les trois bandes horizontales sont de couleur noire, indique que l'emplacement correspondant n'est pas géré ou surveillé par ladite borne,
- un état "non payé" selon lequel la bande horizontale centrale est de couleur jaune tandis que les deux bandes horizontales latérales sont de couleur noire, indique que l'emplacement correspondant est géré ou surveillé par ladite borne, mais qu'aucun paiement n'a été effectué pour ladite place et que par conséquent tout véhicule occupant l'emplacement correspondant est en infraction,
- un état "payé" selon lequel les trois bandes horizontales sont de couleur jaune, indiquant que l'emplacement correspondant est géré ou surveillé par ladite borne, et que la place a été payée et que par conséquent tout véhicule occupant l'emplacement correspondant n'est pas en infraction.

Le second jeu d'éléments d'indication visuelle R1 à R5 indique l'état de réservation des places : "réservé" ou "non réservé". Ces éléments peuvent par exemple prendre la forme de diodes électroluminescentes qui allumée indique l'état réservé de la place et éteinte l'état non réservé de la place.

La borne BO comprend par ailleurs une antenne A disposée au sommet de la partie P4 qui coopère avec des moyens d'émission réception de communications radiofréquences non figurées qui permettent à la borne de communiquer avec l'extérieur.

La borne BO est ainsi adaptée pour communiquer avec un serveur de gestion non figuré encore appelé PMS (acronyme anglo-saxon de « Parking Management System ») dédié au fonctionnement et à la gestion du réseau formé par les bornes BO.

Ce serveur de gestion a pour fonction d'échanger avec l'ensemble des bornes BO des informations concernant leur fonctionnement.

Bien évidemment les transferts de données entre les bornes BO et ce serveur distant de gestion peuvent utiliser d'autres réseaux de communication et notamment des réseaux filaires propriétaires ou non et notamment le réseau téléphonique commuté PSTN.

Ces transferts peuvent également s'opérer manuellement lorsque les bornes BO ne disposent d'aucun moyen de télécommunication, par un opérateur faisant la tournée des bornes. Cet opérateur charge via un terminal portable adapté les données fournies par les bornes à destination du serveur de gestion et inversement décharge dans les bornes les données en provenance du serveur de gestion.

La borne BO peut également être amenée à communiquer directement avec un serveur de réservation comme cela sera détaillé ci-après ou encore directement avec les usagers soit encore pour réserver comme cela sera décrit également ci-après ou bien encore pour opérer du mobile paiement, c'est-à-dire du paiement via un terminal téléphonique de type GSM.

La borne BO peut être autonome sur le plan énergétique en disposant d'un panneau solaire apte à lui apporter l'énergie correspondante.

La borne BO ayant été détaillées, le reste du système nécessaire à la réservation d'une place de stationnement géré par une telle borne peut être décrite à son tour

L'automobiliste 1 définit, de préférence avant de prendre son véhicule, sa demande ou requête 2 de réservation d'une place de parking en utilisant un dispositif d'interrogation 3, qui est par exemple de type multimédia tel qu'un ordinateur personnel connecté au réseau Internet ou bien encore qui peut être par exemple un téléphone mobile.

La requête 2 tient compte des besoins de l'utilisateur 1, par exemple : où souhaite-t-il aller ?, quand souhaite-t-il arriver ?, combien de temps souhaite-t-il rester ?, quand souhaite-t-il quitter ?, quel moyen de paiement souhaite-t-il utiliser ?. La requête peut également être plus précise et indiquer directement la place de stationnement que l'utilisateur 1 souhaite occuper.

La communication 4 (ou échange d'informations) entre le dispositif interrogateur 3 de l'utilisateur 1 et un serveur 5 d'une centrale de réservation peut être réalisée selon différents moyens.

Par exemple, la communication 4 peut requérir, au niveau de l'utilisateur et du serveur de réservation 5, des moyens d'accès multimédia qui traitent des données, de la voix, des télécopies, de la messagerie électronique ou analogue.

Les communications exploitent de préférence le réseau Internet 7 en utilisant de préférence un portail d'accès 6, interposé entre l'utilisateur et le serveur de réservation 5. En pratique, ces moyens sont capables de convertir la demande de l'utilisateur 1 en un format approprié pour échanger des informations avec le serveur de réservation 5.

Le portail 6 peut être équipé de moyens de traitement et de mémorisation 8 afin de permettre le stockage d'informations sur les utilisateurs et réaliser du profilage sur ces derniers.

Le serveur de réservation 5 comprend des moyens de traitement 9 propres à recevoir la demande de réservation, la traiter, et la mémoriser dans une mémoire 10.

Le serveur de réservation 5 est capable de chercher pour l'utilisateur la meilleure place de stationnement libre répondant aux paramètres définis par le demandeur et ce à partir des informations remontées par les différentes bornes BO qui lui fournissent directement ou par l'intermédiaire du serveur de gestion PMS distant de l'opérateur des bornes de stationnement, serveur qui, comme cela a été rappelé ci-dessus, centralise les informations issues des différentes bornes en temps réel ou en différé grâce à des moyens de transfert de données appropriés et notamment le statut "payé" ou "non payé" des places de stationnement placées sous leur contrôle.

Le serveur de réservation 5 envoie donc en retour de la requête de l'utilisateur 1, via le portail 6 le cas échéant, une ou plusieurs propositions de places susceptibles d'être réservées et correspondant au mieux à la requête de l'utilisateur.

Le cas échéant, l'utilisateur 1 confirme la proposition correspondant le mieux à son attente.

La demande de réservation 2 peut être accompagnée d'un identifiant ID de l'utilisateur. Cet identifiant ID peut être le nom de l'utilisateur, le numéro d'une carte de paiement, un numéro de téléphone mobile, le numéro de la carte SIM du téléphone mobile, etc.

Le processus de réservation se termine donc par l'envoi, à l'utilisateur 1 par le serveur de réservation 5, des références (localisation...) de la borne BO et du numéro d'emplacement ainsi qu'éventuellement d'un code de réservation RC notamment lorsque l'utilisateur 1 n'a pas d'identifiant.

Le code de réservation RC, lors qu'il existe, est par exemple calculé à l'aide de moyens de calcul appropriés 11 en tenant compte de l'identifiant de l'utilisateur et/ou de certains au moins des paramètres de la demande de réservation, notamment des informations relatives à l'emplacement, à la date et la durée ou aux services attachés à la réservation.

En variante, un unique code de réservation RC peut être attribué de façon permanente à un utilisateur donné qui serait par exemple abonné auprès de la centrale de réservation.

Les moyens de calcul 11 peuvent comportés des moyens de cryptographie utilisés classiquement dans la sécurisation des données.

Les données de réservation, donc le code RC, sont donc communiquées à l'utilisateur 1 et sont stockés selon différents moyens, par exemple noté sur un papier ou un dispositif qui peut stocker de telles données, comme par exemple un téléphone mobile, une carte à mémoire, un assistant numérique personnel, etc. La saisie du code peut être aussi manuelle (par exemple en utilisant un clavier manuel) ou automatique (saisie magnétique, codes à barres, ou analogues), afin d'être communiqué à la borne BO correspondante.

Parallèlement à l'envoi des informations précitées à l'utilisateur 1, le serveur de réservation 5 communique directement ou par l'intermédiaire du serveur de gestion les informations correspondantes à la borne BO.

La borne BO enregistre dans ses circuits électroniques qu'une place, par exemple la place n°1, a été réservée pour une plage donnée, par exemple de 12h à 13h, à une date donnée, par exemple le mardi 29 mai 2001.

Quand arrive cette journée, la plage 12h-13h pour l'emplacement n°1 n'est plus accessible hormis pour l'usager 1 qui l'a réservé. Ainsi si la place est libre et qu'une voiture se parque à 10h30, l'automobiliste ne pourra obtenir qu'une durée de stationnement au plus de 1h30.

L'indication comme quoi la place est réservée à partir de 12h est communiquée par la borne BO à cet automobiliste dès le choix de la place ou durant le paiement ou lorsqu'il atteint le temps maximal autorisé ou encore lorsqu'il approche de ce temps maximal d'une durée prédéfinie. L'automobiliste sait alors qu'il devra libérer impérativement la place à 12h.

A 12h, l'indication lumineuse R1 s'allume indiquant que la place n° 1a été réservée. Plus personne, exceptée la personne ayant réservée, ne peut alors payer pour cet emplacement dont le signal S1 demeure alors à l'état "non payé" et R1 à l'état "réservé".

Lorsque l'utilisateur 1 arrive à l'heure dite dans la rue où la place a été réservée, il parque son véhicule sur l'emplacement réservé n°1 qui se trouve être normalement libre et se présente à la borne BO correspondante.

L'utilisateur peut alors s'identifier lui-même auprès de la borne BO en utilisant l'interface homme/machine IHM précitée et saisir le code de réservation RC s'il en dispose ou son identifiant ID.

La borne BO vérifie donc les informations fournies par l'utilisateur par rapport aux informations reçues du serveur de réservation. En particulier, la borne peut vérifier le code de réservation RC ou l'identifiant présenté ID, le mode et la validité du paiement ou d'autres paramètres relatifs à la requête de l'utilisateur ou au statut particulier de l'utilisateur.

Les informations de réservation ayant été vérifiées, la borne BO déverrouille l'accès à l'emplacement n°1 ainsi dans la mesure où la place n'a pas été prépayée lors de la réservation, il est alors possible pour l'utilisateur de payer pour la période réservée. L'utilisateur 1 peut obtenir une durée de stationnement supérieure si aucune réservation pour la plage 13h-14h n'a été opérée. L'emplacement n°1 ayant été payé, la borne BO fait ensuite basculer le signal S1 de l'état "non payé" dans l'état "payé".

Selon l'invention, le procédé de réservation permet de réaliser des transactions rapides, de calculer de manière sécurisée des droits d'accès au niveau du serveur de réservation 5 mais aussi localement au niveau de la borne BO, d'utiliser des moyens de communication différents et indépendants de la technologie déployée.

Bien évidemment la présente invention n'est pas limitée au seul mode de réalisation figuré.

Ainsi, les moyens d'indication visuelle MID prévus en partie P4 de la borne ne sont pas nécessaires à la réalisation de la présente invention. L'indication de l'état des paiements et donc celle du statut autorisé ou non pour chacun des emplacements contrôlés par la borne BO peut être communiqué aux agents de surveillance sous d'autres formes : tel qu'un ticket papier imprimé par la borne ou encore de données transmises à un terminal portatif équipant les agents de surveillance.

Ainsi la présente invention couvre aussi la possibilité d'opérer la réservation non pas depuis un site central mais aussi directement sur la borne de stationnement BO.

La réservation directement sur la borne BO peut prendre plusieurs formes : soit directement à partir de l'interface homme/machine IHM précitée, soit à partir d'un terminal de radiocommunication apte à dialoguer avec ladite borne, soit encore à partir de tout terminal multimédia apte à dialoguer avec ladite borne, soit encore à partir d'une autre borne de stationnement.

Considérons le cas où la réservation s'effectue par l'intermédiaire de l'interface homme/machine IHM. L'usager indique qu'il souhaite opérer une réservation au moyen d'une touche de fonction appropriée puis sélectionne alors le (ou les) emplacement qu'il souhaite réserver puis saisi la date et la plage horaire concernées et enfin son identifiant s'il dispose d'une telle clé d'identification.

Cet identifiant peut être, alternativement à ce qui a été indiqué ci-dessus, ou encore un code s'il est abonné à un service centralisé ou un moyen de paiement telle qu'une carte de crédit. Si l'usager ne dispose pas d'un tel identifiant, c'est la borne qui génère alors une clé secrète servant d'identifiant à destination de l'usager. L'identifiant jouant en l'espèce le rôle de code de réservation RC.

L'opération de réservation pour être complète peut nécessiter le pré-paiement de la place ainsi réservée dont le montant peut inclure un montant de réservation forfaitaire ou non.

Le cas échéant, la borne BO comporte également, comme cela est connu, des moyens d'impression 10, par exemple du type à tête thermique, capables de délivrer un ticket 12. Ce ticket peut alors servir de reçu récapitulant les informations de la réservation. Notamment s'il y a attribution d'un identifiant par la borne BO, ce ticket indiquera l'identifiant.

Considérons que la place n°3 a été réservée pour la plage de 10h à 11h. Si un usager n'ayant pas réservé se présente à 9h15, il ne pourra payer pour la place n°3 que pour les 45 minutes restant. L'indication comme quoi la place est réservée à partir de 10h lui est communiquée par la borne BO.

A 10h l'indication lumineuse R3 s'allume indiquant que la place a été réservée. Plus personne, exceptée la personne ayant réservée, ne peut payer pour cet emplacement dont le signal S3 demeure alors à l'état "non payé". L'usager ayant réservé doit lui entrer son identifiant ou celui délivré par la borne BO. La saisie de ce code déverrouille la borne vis-à-vis de l'emplacement n°3. Ainsi dans la mesure où la place n'a pas été payée, la borne permet alors le paiement pour la période considérée (et au-delà si aucune réservation pour la plage 11h-12h n'a été opérée) et dans la mesure ou la place a déjà été payée fait basculer le signal S3 dans l'état payé.

La présence d'un véhicule en infraction alors que l'emplacement a été réservé peut conduire les agents de surveillance à demander la mise en fourrière immédiate du véhicule et/ ou le remboursement de la place à la personne qui ayant réservé ne peut utiliser son emplacement du fait du véhicule contrevenant.

De façon optionnelle la borne BO peut être munie de moyen de détection de la présence de véhicule sur les places supervisées qui peut servir à générer une alerte si une place réservée est occupée sans que le conducteur ait entrer son identifiant.

Le système de réservation selon l'invention permet donc d'améliorer le stationnement et la circulation en ville. Les automobilistes n'ayant pu réserver de place pour cause de saturation des emplacements de stationnement se trouvant ainsi dissuadés de circuler en ville.

Par ailleurs, la possibilité de réserver un emplacement est un moyen important pour favoriser la rotation des véhicules en stationnement et éviter qu'un même usager monopolise une place au-delà du temps maximum réglementaire, temps maximum réglementaire que les agents de surveillance peuvent difficilement contrôlé.

En variante de réalisation, il est également possible de munir les emplacements de stationnements de moyens de contrôle d'accès pilotables tels que des plots amovibles, ces moyens de contrôle d'accès servant à bloquer l'accès à ces emplacements pendant les plages réservées. Seul les usagers ayant réservé ont alors la possibilité de commander ces moyens de contrôle d'accès pour permettre le parcage de leurs véhicules. Cette commande peut s'effectuer à partir de l'interface homme/machine IHM de la borne correspondante ou encore en utilisant un téléphone portable de type GSM ou autre, apte à dialoguer avec ladite borne BO ou directement avec lesdits moyens de contrôle d'accès ou encore avec le serveur de réservation 5.

## Revendications

1. Procédé de réservation d'une pluralité de places de stationnement payant gérées par au moins une borne (BO) de type parcmètre comportant pour chaque place gérée des moyens d'indication de l'état des paiements (Si) définissant le statut autorisé ou non du stationnement, **caractérisé en ce qu'**il comprend les étapes suivantes ;
- au niveau d'un utilisateur (1), définir une demande de réservation (2) selon des paramètres choisis;
- recevoir en retour des données de réservation et l'identification d'au moins une place de stationnement libre correspondant auxdits paramètres choisis;
- indiquer l'état de réservation des places à l'aide d'un jeu d'éléments d'indication visuelle de la borne;
- le moment venu, présenter lesdites données de réservation à la borne de stationnement (BO) associée à ladite place de stationnement ; et
- au niveau de la borne (BO), vérifier lesdites données et permettre l'information par lesdits moyens d'indication de l'autorisation correspondante de stationner.

2. Procédé de réservation d'une pluralité de places de stationnement payant gérées par au moins une borne (BO) de type parcmètre comportant pour chaque place gérée des moyens d'indication de l'état des paiements (Si) définissant le statut autorisé ou non du stationnement, **caractérisé en ce qu'**il comprend les étapes suivantes :
- au niveau d'un utilisateur (1), définir une demande de réservation (2) selon des paramètres choisis ;
- recevoir en retour des données de réservation et l'identification d'au moins une place de stationnement libre correspondant audits paramètres choisis ;
- le moment venu, présenter lesdites données de réservation à la borne de stationnement (BO) associée à ladite place de stationnement ;
- au niveau de la borne (BO), vérifier lesdites données et permettre l'information par lesdits moyens d'indication de l'autorisation correspondante de stationner; et
- le verrouillage et le déverrouillage de moyens de contrôle d'accès limitant l'accès aux emplacements pendant les plages de réservation aux seuls utilisateurs ayant réservés.

3. Procédé selon la revendication 1 ou 2, **caractérisé en ce que** la demande de réservation peut être adressée directement à une borne de stationnement.

4. Procédé selon l'une quelconque des revendications 1 à 3, **caractérisé en ce que** la demande de réservation peut être adressée à une centrale de réservation.

5. Procédé selon l'une quelconque des revendications 1 à 4, **caractérisé en ce que** les données de réservation comportent un code de réservation (RC) propre à la réservation.

6. Procédé selon l'une quelconque des revendications 1 à 4, **caractérisé en ce que** les données de réservation comportent un identifiant (ID) propre à l'utilisateur.

7. Procédé selon les revendications 5 et 6, **caractérisé en ce que** la détermination du code de réservation (RC) tient compte de l'identifiant (ID) de l'utilisateur et/ou de certains au moins des paramètres définissant la demande de réservation.

8. Procédé selon l'une quelconque des revendications précédentes, **caractérisé en ce que** lesdits paramètres de la demande de réservation sont relatifs à la localisation du stationnement, la date et la durée ainsi qu'éventuellement des services associés, un mode de paiement, et/ou le prix de la réservation.

9. Procédé selon l'une quelconque des précédentes revendications, **caractérisé en ce qu'**il comprend en outre une étape de conformation dans laquelle l'utilisateur confirme la réservation d'une place de stationnement donnée.

10. Procédé selon l'une quelconque des précédentes revendications, **caractérisé en ce qu'**il comprend en outre des étapes de verrouillage et de déverrouillage de moyens de contrôle d'accès limitant l'accès aux emplacements pendant les plages de réservation aux seuls utilisateurs ayant réservés.

11. Dispositif de réservation d'une pluralité de places de stationnement payant **caractérisé en ce qu'**il comporte au moins une borne (BO) de type parcmètre gérant lesdites places de stationnement, ladite borne (BO) comportant pour chaque place gérée des moyens d'indication de l'état des paiements (Si) définissant le statut autorisé ou non du stationnement et des moyens de réservation aptes à recevoir une demande de réservation (2) d'une place de stationnement définie selon des paramètres choisis, à élaborer des données de réservation et l'identification d'au moins une place de stationnement libre correspondant audits paramètres choisis, des moyens de vérification portés par la borne (BO) associée à ladite place de stationnement réservée apte à vérifier les données de réservations présentées par l'utilisateur, et un jeu d'éléments d'indication visuelle porté par la borne, destiné à indiquer l'état de réservation des places.

12. Dispositif de réservation d'une pluralité de places de stationnement, payant **caractérisé en ce qu'**il comporte au moins une borne (BO) de type parcmètre gérant lesdites places de stationnement, ladite borne (BO) comportant pour chaque place gérée des moyens d'indication de l'état des paiements (Si) définissant le statut autorisé ou non du stationnement et des moyens de réservation aptes à recevoir une demande de réservation (2) d'une place de stationnement définie selon des paramètres choisis, à élaborer des données de réservation et l'identification d'au moins une place de stationnement libre correspondant auxdits paramètres choisis, des moyens de vérification portés par la borne (BO) associée à ladite place de stationnement réservée apte à vérifier les données de réservations présentées par l'utilisateur, et des moyens de contrôle d'accès commandés adaptés à limiter l'accès aux emplacements de stationnement pendant les plages de réservation aux seuls utilisateurs ayant réservés.

13. Dispositif selon la revendication 11 ou 12, **caractérisé en ce que** lesdits moyens de réservation sont portés par chacune desdites bornes (BO).

14. Dispositif selon l'une quelconque des revendications 11 à 13, **caractérisé en ce que** lesdits moyens de réservation sont constitués par un serveur de réservation (5).

15. Dispositif selon la revendication 14, **caractérisé en ce que** ledit serveur de réservation (5) coopère avec un portail de communication (6) apte à communiquer avec l'utilisateur selon au moins un moyen de communication appartenant au groupe formé par les moyens de téléphonie avec et/ ou sans fil, les moyens d'échanges de données, les télécopieurs, les dispositifs de reconnaissance vocale, des dispositifs de communication de type Internet ou analogue.

16. Dispositif selon l'une des revendications 14 à 15, **caractérisé en ce que** ledit serveur de réservation (5) comprend des moyens de calcul (11) aptes à calculer tout ou partie des données de réservation (RC).

17. Dispositif selon l'une des revendications 14 à 16, **caractérisé en ce que** ladite borne (BO) comprend en outre des moyens de communication propre à communiquer à l'opérateur gestionnaire des bornes de stationnement et/ou audit serveur de réservation (5) des informations relatives à la disponibilité des places de stationnement gérées.

18. Dispositif selon l'une des revendications 11 à 17, **caractérisé en ce qu'**il comporte en outre des moyens de contrôle d'accès commandes adaptés à limiter l'accès aux emplacements de stationnement pendant les plages de réservation aux seuls utilisateurs ayant réservés.

19. Dispositif selon la revendication 18, **caractérisé en ce que** lesdits moyens de contrôle d'accès sont télécommandables via un téléphone portable.

## Claims

1. Reservation method for a plurality of payment-requiring parking spaces administered by at least one terminal (BO) of a parking meter type having, for each space administered, indication means for the state of payments (Si) defining the authorised or non-authorised status of parking, **characterised in that** it comprises the following steps:
- in the context of a user (1), defining a reservation request (2) according to selected parameters;
- receiving, in return, reservation data and the identification of at least one free parking space corresponding to said selected parameters;
- indicating the state of reservation of the spaces with the aid of a set of visual indication elements of the terminal;
- at the due time, presenting said reservation data to the parking terminal (BO) associated with said parking space; and
- in the context of the terminal (BO), verifying said data and enabling said indication means to provide the information of the corresponding authorisation to park.

2. Reservation method for a plurality of payment-requiring parking spaces administered by at least one terminal (BO) of a parking meter type having, for each space administered, indication means for the state of payments (Si) defining the authorised or non-authorised status of parking, **characterised in that** it comprises the following steps:
- in the context of a user (1), defining a reservation request (2) according to selected parameters;
- receiving, in return, reservation data and the identification of at least one free parking space corresponding to said selected parameters;
- at the due time, presenting said reservation data to the parking terminal (BO) associated with said parking space;
- in the context of the terminal (BO), verifying said data and enabling said indication means to provide the information of the corresponding authorisation to park; and
- locking and unlocking access control means which limit access to the spaces during the reservation periods to only those users having reserved.

3. Method according to claim 1 or 2, **characterised in that** the reservation request can be addressed directly to a parking terminal.

4. Method according to any one of claims 1 to 3, **characterised in that** the reservation request can be addressed to a reservation centre.

5. Method according to any one of claims 1 to 4, **characterised in that** the reservation data include a reservation code (RC) specific to the reservation.

6. Method according to any one of claims 1 to 4, **characterised in that** the reservation data include an identifier (ID) specific to the user.

7. Method according to claims 5 and 6, **characterised in that** determination of the reservation code (RC) takes into account the identifier (ID) of the user and/or at least some of the parameters defining the reservation request.

8. Method according to any one of the preceding claims, **characterised in that** said reservation request parameters relate to the parking location, the date and the duration and also, optionally, associated services, a mode of payment and/or the price of the reservation.

9. Method according to any one of the preceding claims, **characterised in that** it additionally comprises a confirmation step in which the user confirms the reservation of a given parking space.

10. Method according to any one of the preceding claims, **characterised in that** it additionally comprises steps of locking and unlocking access control means which limit access to the spaces during the reservation periods to only those users having reserved.

11. Reservation apparatus for a plurality of payment-requiring parking spaces, **characterised in that** it comprises at least one terminal (BO) of a parking meter type administering said parking spaces, said terminal (BO) having, for each space administered, indication means for the state of payments (Si) defining the authorised or non-authorised status of parking and reservation means arranged to receive a request (2) for reservation of a parking space defined according to selected parameters and to issue reservation data and the identification of at least one free parking space corresponding to said selected parameters, verification means which are provided at the terminal (BO) associated with said reserved parking space and arranged to verify the reservation data presented by the user, and a set of visual indication elements which are provided at the terminal, for indicating the state of reservation of the spaces.

12. Reservation apparatus for a plurality of payment-requiring parking spaces, **characterised in that** it comprises at least one terminal (BO) of a parking meter type administering said parking spaces, said terminal (BO) having, for each space administered, indication means for the state of payments (Si) defining the authorised or non-authorised status of parking and reservation means arranged to receive a request (2) for reservation of a parking space defined according to selected parameters and to issue reservation data and the identification of at least one free parking space corresponding to said selected parameters, verification means which are provided at the terminal (BO) associated with said reserved parking space and arranged to verify the reservation data presented by the user, and controlled access control means arranged to limit access to the parking spaces during the reservation periods to only those users having reserved.

13. Apparatus according to claim 11 or 12, **characterised in that** said reservation means are provided at each of said terminals (BO).

14. Apparatus according to any one of claims 11 to 13, **characterised in that** said reservation means are constituted by a reservation server (5).

15. Apparatus according to claim 14, **characterised in that** said reservation server (5) co-operates with a communication portal (6) arranged to communicate with the user by at least one communication means belonging to the group consisting of wired and/or wireless telephony means, data interchange means, telefax machines, voice recognition devices, communication devices of the Internet type or the like.

16. Apparatus according to one of claims 14 to 15, **characterised in that** said reservation server (5) includes calculation means (11) arranged to calculate some or all of the reservation data (RC).

17. Apparatus according to one of claims 14 to 16, **characterised in that** said terminal (BO) additionally comprises communication means able to communicate to the operator administering the parking terminals and/or to said reservation server (5) information relating to the availability of the parking spaces administered.

18. Apparatus according to one of claims 11 to 17, **characterised in that** it additionally comprises controlled access control means arranged to limit access to the parking spaces during the reservation periods to only those users having reserved.

19. Apparatus according to claim 18, **characterised in that** said access control means are remotely controllable via a mobile telephone.

## Patentansprüche

1. Verfahren zur Reservierung einer Vielzahl von kostenpflichtigen Parkplätzen, die von zumindest einer Anschlussklemme (BO) der Art Parkzeituhr verwaltet werden, welche für jeden verwalteten Platz Vorrichtungen zum Anzeigen des Bezahlungszustandes (Si) aufweist, der den für das Parken zugelassenen oder nicht zugelassenen Status definiert, **dadurch gekennzeichnet, dass** das Verfahren die folgenden Schritte aufweist:
- Definition einer Reservierungsanfrage (2) gemäß gewählter Parameter von Seiten eines Benutzers (1);
- im Gegenzug Empfang der Reservierungsdaten und Identifizierung zumindest eines freien Parkplatzes entsprechend den gewählten Parametern;
- Anzeigen des Reservierungszustandes der Plätze mit Hilfe eines Satzes visueller Anzeigeelemente der Anschlussklemme;
- zu gegebenem Zeitpunkt Vorlegen der Reservierungsdaten an der dem Parkplatz zugehörigen Parkanschlussklemme (BO);
- und
- Überprüfung dieser Daten im Bereich der Anschlussklemme (BO) und Zulassen der Information für die entsprechende Berechtigung des Parkens durch die Anzeigevorrichtungen.

2. Verfahren zur Reservierung einer Vielzahl von kostenpflichtigen Parkplätzen, die von zumindest einer Anschlussklemme (BO) der Art Parkzeituhr verwaltet werden, welche für jeden verwalteten Platz Vorrichtungen zum Anzeigen des Bezahlungszustandes (Si) aufweist, der den für das Parken zugelassenen oder nicht zugelassenen Status definiert, **dadurch gekennzeichnet, dass** das Verfahren die folgenden Schritte aufweist:
- Definition einer Reservierungsanfrage (2) gemäß gewählter Parameter von Seiten eines Benutzers (1);
- im Gegenzug Empfang der Reservierungsdaten und Identifizierung zumindest eines freien Parkplatzes entsprechend den gewählten Parametern;
- zu gegebenem Zeitpunkt Vorlegen der Reservierungsdaten an der dem Parkplatz zugehörigen Parkanschlussklemme (BO);
- Überprüfung dieser Daten im Bereich der Anschlussklemme (BO) und Zulassen der Information für die entsprechende Berechtigung des Parkens durch die Anzeigevorrichtungen; und
- Verriegelung und Entriegelung von Zugangskontrollvorrichtungen, welche den Zugang zu den Parkplätzen innerhalb der Reservierungszonen nur auf diejenigen Benutzer begrenzen, die reserviert haben.

3. Verfahren gemäß Anspruch 1 oder 2, **dadurch gekennzeichnet, dass** die Reservierungsanfrage direkt an eine Parkanschlussklemme gerichtet werden kann.

4. Verfahren gemäß irgendeinem der Ansprüche 1 bis 3, **dadurch gekennzeichnet, dass** die Reservierungsanfrage an eine Reservierungszentrale gerichtet werden kann.

5. Verfahren gemäß irgendeinem der Ansprüche 1 bis 4, **dadurch gekennzeichnet, dass** die Reservierungsdaten einen Reservierungscode (RC) aufweisen, welcher der Reservierung zu eigen ist.

6. Verfahren gemäß irgendeinem der Ansprüche 1 bis 4, **dadurch gekennzeichnet, dass** die Reservierungsdaten ein dem Benutzer eigenes Kennzeichen (ID) aufweisen.

7. Verfahren gemäß den Ansprüchen 5 und 6, **dadurch gekennzeichnet, dass** die Festlegung des Reservierungscodes (RC) dem Kennzeichen (ID) des Benutzers und/oder zumindest bestimmter der Parameter Rechnung trägt, welche die Reservierungsanfrage definieren.

8. Verfahren gemäß irgendeinem der vorherigen Ansprüche, **dadurch gekennzeichnet, dass** die Parameter der Reservierungsanfrage sich auf den Ort des Parkens, das Daum und die Dauer sowie auf eventuell zugehörige Dienste, einen Bezahlungsmodus und/oder den Preis der Reservierung beziehen.

9. Verfahren gemäß irgendeinem der vorherigen Ansprüche, **dadurch gekennzeichnet, dass** es außerdem einen Bestätigungsschritt aufweist, in dem der Benutzer die Reservierung eines zugeteilten Parkplatzes bestätigt.

10. Verfahren gemäß irgendeinem der vorherigen Ansprüche, **dadurch gekennzeichnet, dass** es außerdem Schritte der Verriegelung und Entriegelung von Zugangskontrollvorrichtungen aufweist, welche den Zugang zu den Parkplätzen innerhalb der Reservierungszonen nur auf diejenigen Benutzer begrenzen, die reserviert haben.

11. Reservierungsvorrichtung für eine Vielzahl von kostenpflichtigen Parkplätzen, **dadurch gekennzeichnet, dass** sie zumindest eine Anschlussklemme (BO) der Art Parkzeituhr aufweist, welche die besagten Parkplätze verwaltet, wobei die Anschlussklemme (BO) für jeden verwalteten Platz Vorrichtungen zum Anzeigen des Bezahlungszustandes (Si) aufweist, der den für das Parken zugelassenen oder nicht zugelassenen Status definiert, und Reservierungsvorrichtungen, die in der Lage sind, eine Reservierungsanfrage (2) für einen gemäß der gewählten Parameter definierten Parkplatz entgegen zu nehmen und Reservierungsdaten und die Identifizierung zumindest eines freien Parkplatzes entsprechend den gewählten Parametern auszuarbeiten, an der dem reservierten Parkplatz zugehörigen Anschlussklemme (BO) angeordnete Überprüfungsvorrichtungen , die dazu in der Lage sind, die von dem Benutzer vorgelegten Reservierungsdaten zu überprüfen und einen an der Anschlussklemme angeordneten Satz visueller Anzeigeelemente, die dazu bestimmt sind, den Reservierungszustand der Plätze anzuzeigen.

12. Reservierungsvorrichtung für eine Vielzahl von kostenpflichtigen Parkplätzen, **dadurch gekennzeichnet, dass** sie zumindest eine Anschlussklemme (BO) der Art Parkzeituhr aufweist, welche die besagten Parkplätze verwaltet, wobei die Anschlussklemme (BO) für jeden verwalteten Platz Vorrichtungen zum Anzeigen des Bezahlungszustandes (Si) aufweist, der den für das Parken zugelassenen oder nicht zugelassenen Status definiert, und Reservierungsvorrichtungen, die in der Lage sind, eine Reservierungsanfrage (2) für einen gemäß der gewählten Parameter definierten Parkplatz entgegen zu nehmen und Reservierungsdaten und die Identifizierung zumindest eines freien Parkplatzes entsprechend den gewählten Parametern auszuarbeiten, an der dem reservierten Parkplatz zugehörigen Anschlussklemme (BO) angeordnete Überprüfungsvorrichtungen, die dazu in der Lage sind, die von dem Benutzer vorgelegten Reservierungsdaten zu überprüfen und gesteuerte Zugangskontrollvorrichtungen, die dafür eingerichtet sind, den Zugang zu den Parkplätzen innerhalb der Reservierungszonen nur auf diejenigen Benutzer zu begrenzen, die reserviert haben.

13. Vorrichtung gemäß Anspruch 11 oder 12, **dadurch gekennzeichnet, dass** die Reservierungsvorrichtungen an jeder der Anschlussklemmen (BO) angeordnet sind.

14. Vorrichtung gemäß irgendeinem der Ansprüche 11 bis 13, **dadurch gekennzeichnet, dass** die Reservierungsvorrichtungen von einem Reservierungsserver (5) gebildet sind.

15. Vorrichtung gemäß Anspruch 14, **dadurch gekennzeichnet, dass** der Reservierungsserver (5) mit einem Kommunikationsportal (6) zusammenwirkt, das dazu in der Lage ist, mit dem Benutzer mit Hilfe zumindest einer Kommunikationseinrichtung zu kommunizieren, die zu der Gruppe gehört, die gebildet ist aus Telefoneinrichtungen mit und/oder ohne Draht, Datenaustauscheinrichtungen, Fotokopierern, Spracherkennungsvorrichtungen, Kommunikationsvorrichtungen der Art Internet oder dergleichen.

16. Vorrichtung gemäß einem der Ansprüche 14 bis 15, **dadurch gekennzeichnet, dass** der Reservierungsserver (5) Recheneinrichtungen (11) aufweist, die dazu in der Lage sind, vollständig oder teilweise die Reservierungsdaten (RC) zu berechnen.

17. Vorrichtung gemäß einem der Ansprüche 14 bis 16, **dadurch gekennzeichnet, dass** die Anschlussklemme (BO) außerdem Kommunikationseinrichtungen aufweist, die in der Lage sind, dem Verwaltungsbetreiber der Parkanschlussklemmen und/oder dem Reservierungsserver (5) Informationen bezüglich der Verfügbarkeit verwalteter Parkplätz mitzuteilen.

18. Vorrichtung gemäß einem der Ansprüche 11 bis 17, **dadurch gekennzeichnet, dass** sie außerdem gesteuerte Zugangskontrollvorrichtungen aufweist, die dazu in der Lage sind, den Zugang zu den Parkplätzen innerhalb der Reservierungszonen nur auf diejenigen Benutzer zu begrenzen, die reserviert haben.

19. Vorrichtung gemäß Anspruch 18, **dadurch gekennzeichnet, dass** diese Zugangskontrollvorrichtungen über ein Mobiltelephon fernsteuerbar sind.
